# EUROPÄISCHE PATENTSCHRIFT

(11) **EP 4 182 154 B1**
(45) Veröffentlichungstag und Bekanntmachung des Hinweises auf die Patenterteilung: **02.07.2025**
(21) Anmeldenummer: 21755690.1
(22) Anmeldetag: 06.07.2021
(51) Int. Cl.: B29C 65/32, B29C 65/36, B29C 65/46, F16L 33/00, F16L 37/088, F16L 37/14, B29C 65/00, B29L 31/24

(54) **VERFAHREN ZUR BILDUNG EINER STECKERBAUGRUPPE MITTELS INDUKTIONSEINSCHMELZEN UND STECKERBAUGRUPPE**
METHOD OF FORMING A CONNECTOR ASSEMBLY BY MEANS OF INDUCTION FUSION AND CONNECTOR ASSEMBLY
PROCÉDÉ DE FORMATION D'UN ENSEMBLE DE CONNECTEURS PAR FUSION PAR INDUCTION ET ENSEMBLE DE CONNECTEURS

(30) Priorität: 15.07.2020 AT 506142020
(43) Veröffentlichungstag der Anmeldung: 24.05.2023
(73) Patentinhaber: Henn GmbH & Co KG., 6850 Dornbirn (AT)
(72) Erfinder: BROGER, Johannes, 6850 Dornbirn (AT)
(74) Vertreter: Burger, Hannes
(86) Internationale Anmeldenummer: PCT/AT2021/060241
(87) Internationale Veröffentlichungsnummer: WO 2022/011406

(56) Entgegenhaltungen:
- EP-A1- 2 641 724
- EP-A1- 3 584 489
- WO-A1-2015/161333
- WO-A1-2017/193145
- DE-A1- 102016 226 198
- DE-B- 1 055 305
- US-A1- 2013 252 014
- US-A1- 2017 146 159

## Beschreibung

Die Erfindung betrifft ein Verfahren zur Bildung eines ersten Steckverbinders, der zur Verbindung von Leitungen für flüssige und/oder gasförmige Medien mit einem zweiten Steckverbinder ausgebildet ist und zur Bildung einer Steckerbaugruppe vorgesehen ist. Weiters betrifft die Erfindung auch noch einen derartigen Steckverbinder.

Ein gattungsgemäß ausgebildeter Steckverbinder zur Bildung einer Steckerbaugruppe unter Verwendung eines zweiten Steckverbinders ist aus der EP 3 584 489 A1 bekannt geworden. Dazu sind ein rohrförmiger, aus einem Kunststoffmaterial gebildeter Steckverbinderkörper und eine aus einem metallischen Werkstoff gebildete Aufnahmehülse vorgesehen. Innerhalb der Aufnahmehülse ist zur Bildung einer Aufnahmenut für ein darin aufzunehmendes Dichtelement ein eigenes und zusätzliches Halteelement aus einem Kunststoffmaterial angeordnet. Eine erste Nutseitenfläche sowie die Nutgrundfläche der Aufnahmenut werden vom Steckverbinderkörper gebildet. Die zweite Nutseitenfläche der Aufnahmenut wird von einer Stirnfläche des zusätzlichen Halteelements gebildet. Der Steckverbinderkörper, die Aufnahmehülse und das innerhalb der Aufnahmehülse befindliche Halteelement definieren einen Aufnahmeraum für den zweiten Steckverbinder. Die positionierte Halterung des zusätzlichen Halteelements in der Metallhülse erfolgt mittels mehrerer umgeformter Haltenasen der Metallhülse. Nachteilig dabei ist, dass zur Halterung und Positionierung des zusätzlichen Halteelements weiters die Aufnahmehülse außenseitig sowohl den Steckverbinderkörper als auch das Halteelement übergreifend anzuordnen ist.

Die DE 10 2008 046 143 A1 beschreibt eine Schnellkupplungsanordnung zur fluidleitenden Verbindung mit Fluidleitungseinrichtungen, mit einem Stutzen und einer damit lösbar verbindbaren Kupplung sowie einer zwischen dem Stutzen und der Kupplung angeordneten Dichtungseinrichtung. Eine Federeinrichtung steht mit der Kupplung in lösbarem Formschlusseingriff. Der Stutzen ist zur Bildung der Kopplungsstellung in den Aufnahmeraum der Kupplung einzuschieben und kommt an der Dichtungseinrichtung umfänglich zur Anlage. Zur Aufnahme der Dichtungseinrichtung weist der Kupplungskörper der Kupplung eine über den Umfang durchlaufende nutförmige Vertiefung auf, welche allseitig vom Werkstoff des Kupplungskörpers ausgebildet ist. Nachteilig dabei ist der hohe Aufwand für die Ausbildung oder Herstellung der nutförmigen Vertiefung.

Die WO2015161333A1 offenbart eine Steckerbaugruppe, umfassend ein Rohr, ein Dichtungselement und einen Steckverbinder, welcher einen Verbinderkörper umfasst. Der Verbinderkörper weist einen Ringraum auf, der zwischen einem ersten Mantelabschnitt und einem zweiten Mantelabschnitt des Steckverbinders liegt.

Aufgabe der vorliegenden Erfindung war es, die Nachteile des Standes der Technik zu überwinden und ein Verfahren und einen Steckverbinder zur Verfügung zu stellen, bei dem die vollständige Ausbildung einer Aufnahmenut für ein Dichtelement kosdtengünstiger und einfacher realisierbar ist.

Diese Aufgabe wird durch ein Verfahren und insbesondere durch einen nach dem Verfahren gebildeten Steckverbinder gemäß den Ansprüchen gelöst.

Das Verfahren ist zur Bildung eines ersten Steckverbinders vorgesehen. Der erste Steckverbinder ist zur Verbindung von Leitungen für flüssige und/oder gasförmige Medien mit einem zweiten Steckverbinder ausgebildet und ist weiters zur Bildung einer Steckerbaugruppe vorgesehen. Bei diesem Verfahren werden folgende Schritte durchgeführt
- Bereitstellen des ersten Steckverbinders, welcher erste Steckverbinder einen rohrförmig ausgebildeten Steckverbinderkörper aufweist, der aus einem Kunststoffwerkstoff gebildet ist und einen Aufnahmeraum mit einer Längsachse definiert, und sich die Längsachse zwischen einem ersten Endbereich und einem zweiten Endbereich erstreckt, wobei vom Steckverbinderkörper eine erste Nutseitenfläche und zumindest ein Teilabschnitt einer Nutgrundfläche einer Aufnahmenut mit einem Innendurchmesser definiert wird,
- Bereitstellen eines Einsatzelements, welches Einsatzelement zur Bildung der Aufnahmenut in den Aufnahmeraum eingesetzt ist, wobei eine zweite Nutseitenfläche vom Einsatzelement definiert ist und die zweite Nutseitenfläche dem ersten Endbereich näherliegend angeordnet ist als die erste Nutseitenfläche,
- Bereitstellen eines Dichtelements, welches Dichtelement ringförmig ausgebildet und in die vom Steckverbinderkörper und dem Einsatzelement definierte Aufnahmenut eingesetzt und in Richtung der Längsachse positioniert gehalten wird, wobei weiters noch vorgesehen ist
- dass ein Einsatzelement-Halteabschnitt im Steckverbinderkörper vorgesehen wird, welcher Einsatzelement-Halteabschnitt anschließend an die Nutgrundfläche auf der von der ersten Nutseitenfläche abgewendeten Seite angeordnet oder ausgebildet ist und einen Innendurchmesser definiert,
- dass das Einsatzelement aus einem metallischen Werkstoff mit ferromagnetischen Eigenschaften gebildet ist,
- dass das Einsatzelement selbst oder mehrere vom Einsatzelement abstehende Halteabschnitte jeweils mit einer auf die von der Längsachse abgewendeten Seite ausgerichteten Radialkraft gegen den Einsatzelement-Halteabschnitt angelegt wird oder werden,
- dass das Einsatzelement selbst oder zumindest jene vom Einsatzelement abstehenden Halteabschnitte von der von einem elektromagnetischen Feld mittels einer Induziervorrichtung erzeugten Energie auf eine Temperatur zumindest oberhalb der Erweichungstemperatur des Kunststoffwerkstoffs des Steckverbinderkörpers erwärmt wird oder werden,
- dass der Kunststoffwerkstoff zumindest in einem direkten Kontaktbereich mit dem Einsatzelement selbst oder zumindest in einem direkten Kontaktbereich mit den vom Einsatzelement abstehenden Halteabschnitten in einen umformbaren Aggregatzustand überführt wird, und
- dass das Einsatzelement selbst mittels der aufgebauten Radialkraft in den umformbaren Kunststoffwerkstoff abschnittsweise eindringt und bereichsweise eingebettet wird oder dass die vom Einsatzelement abstehenden Halteabschnitte mittels der aufgebauten Radialkraft in den umformbaren Kunststoffwerkstoff abschnittsweise eindringen und bereichsweise eingebettet werden.

Vorteilhaft ist bei den hier gewählten Verfahrensschritten, dass so mittels der auf Induktionsbasis erfolgenden Erwärmung des Einsatzelements dessen ortsfeste Positionierung und Halterung im Einsatzelement-Halteabschnitt rasch und kostengünstiger durchführbar ist. Durch die Wahl des dafür geeigneten Werkstoffs für das Einsatzelement und dessen gerichtete radiale Vorspannkraft noch vor dem teilweisen Eindringen desselben in den Kunststoffwerkstoff erfolgt ein selbsttätiges Aufweiten oder radiales Vergrößern der Außenabmessung in den partiell zumindest auf Umformtemperatur verbrachten Kunststoffwerkstoff.

Weiters ist ein Vorgehen vorteilhaft, bei dem die Induziervorrichtung und das von dieser erzeugte elektromagnetische Feld deaktiviert und damit die Energieerzeugung beendet wird, und nach dem Unterschreiten der Erweichungstemperatur sich der zuvor in seinem umformbaren Aggregatzustand befindliche Kunststoffwerkstoff verfestigt und das Einsatzelement selbst oder zumindest jene vom Einsatzelement abstehenden Halteabschnitte im Einsatzelement-Halteabschnitt vom Kunststoffwerkstoff formschlüssig gehalten wird oder werden. So kann sich nach Beendigung des Induktionsvorgangs der partiell erwärmte Kunststoff rasch verfestigen und damit verbunden die positionierte Halterung des Einsatzelements vom Kunststoffwerkstoff erzielt werden.

Eine weitere vorteilhafte Vorgehensweise ist dadurch gekennzeichnet, dass der Einsatzelement-Halteabschnitt bezüglich des Innendurchmessers der Nutgrundfläche mit einem dazu größeren Innendurchmesser ausgebildet wird und zwischen dem Einsatzelement-Halteabschnitt und der Nutgrundfläche eine stufenförmige Stützfläche ausgebildet wird. Damit kann zumindest in eine Axialrichtung eine Anschlagfläche für das Einsatzelement geschaffen werden.

Vorteilhaft ist auch eine Verfahrensvariante, bei welcher der Einsatzelement-Halteabschnitt mit einer Vielzahl von über den Umfang verteilt angeordneten Stegen ausgebildet wird. Durch die Wahl einer Mehrzahl an Stegen kann so die Masse des zu erweichenden Kunststoffmaterials in gewissen Grenzen reduziert werden. Darüber hinaus kann so aber auch ein gewisser Freiraum für den beim Eindringvorgang verdrängten Kunststoff geschaffen werden.

Eine andere Vorgehensweise zeichnet sich dadurch aus, wenn die Stege unmittelbar benachbart zueinander angeordnet werden und jeweils eine parallele Ausrichtung bezüglich der Längsachse aufweisen. Damit kann ein Verkeilen des Einsatzelement beim Einsetzvorgang leichter verhindert werden.

Weiters ist ein Vorgehen vorteilhaft, bei dem die Stege in Richtung der Längsachse gesehen jeweils mit einem Querschnitt ausgewählt aus der Gruppe von Formen eines Kreisabschnitts, eines Halbkreis-Abschnitts, eines Trapezes, eines Dreiecks ausgebildet werden. So kann die Kontaktfläche beim Einschieben des Einsatzelements verkleinert werden. Darüber hinaus kann so aber die Masse des im Kontaktbereich befindlichen Kunststoffs in gewissen Grenzen reduziert werden.

Eine weitere vorteilhafte Vorgehensweise ist dadurch gekennzeichnet, dass das Einsatzelement selbst in Richtung der Längsachse gesehen als ein nahezu über den Umfang durchlaufender Kreisringabschnitt mit einer Unterbrechungsstelle ausgebildet wird. Damit kann vom Basiskörper des Einsatzelements selbst die Radialkraft in Richtung auf den Einsatzelement-Halteabschnitt aufgebaut und ausgeübt werden.

Vorteilhaft ist auch eine Verfahrensvariante, bei welcher zwei Einsatzelemente bereitgestellt werden, welche Einsatzelemente zueinander gleichartig ausgebildet sind, und die beiden Einsatzelemente unmittelbar benachbart zueinander mit einer bezüglich der beiden Unterbrechungsstellen zueinander umfangsmäßig versetzten Anordnung angeordnet werden. Damit kann eine noch besserer und dauerhaftere Ausbildung der Aufnahmenut erzielt werden.

Eine andere Vorgehensweise zeichnet sich dadurch aus, wenn die beiden Unterbrechungsstellen um einen Winkel mit einem Winkelwert zueinander versetzt angeordnet werden, der aus einem Winkel-Wertebereich stammt, dessen untere Grenze 150°, insbesondere 170°, und dessen obere Grenze 210°, insbesondere 190°, beträgt. Damit kann eine über den Umfang durchgängig geschlossene Aufnahmenut geschaffen werden.

Weiters ist ein Vorgehen vorteilhaft, bei dem das Einsatzelement selbst in dessen unverformter Ausgangsstellung mit einem Außendurchmesser ausgebildet wird, der größer ist als der Innendurchmesser des Einsatzelement-Halteabschnitts oder dass zumindest die vom Einsatzelement abstehenden Halteabschnitte in deren unverformten Ausgangsstellung mit einer äußeren Umhüllenden ausgebildet werden, die größer ist als der Innendurchmesser des Einsatzelement-Halteabschnitts. Damit kann durch die dem Werkstoff des Einsatzelements innenwohnenden elastischen Eigenschaften nach dem Einsetzen in den Einsatzelement-Halteabschnitt die für den Eindringvorgang in das erweichte Kunststoffmaterial erforderliche Radialkraft aufgebaut werden.

Eine weitere vorteilhafte Vorgehensweise ist dadurch gekennzeichnet, dass das Einsatzelement mit den von diesem abstehenden Halteabschnitten einen über den Umfang durchgängig ausgebildeten Basiskörper in Form eines Kreisrings umfasst und die Halteabschnitte ausgehend vom Innenumfang des Basiskörpers auf die von der Längsachse abgewendete Seite ragend angeordnet werden. Durch die in Form von Flügeln vorragenden Halteabschnitte und die dem Werkstoff innenwohnenden elastischen Eigenschaften kann nach dem Einsetzen in den Einsatzelement-Halteabschnitt die für den Eindringvorgang in das erweichte Kunststoffmaterial erforderliche Radialkraft sicher aufgebaut werden.

Vorteilhaft ist auch eine Verfahrensvariante, bei welcher das Dichtelement erst nach dem ortsfesten Positionieren zumindest eines der Einsatzelemente oder nach dem ortsfesten Positionieren des Einsatzelements mit den von diesem abstehenden Halteabschnitte und dem Ausbilden der Aufnahmenut in die Aufnahmenut eingesetzt wird. Damit kann eine Beschädigung des Dichtelements beim Erwärmen des Einsatzelements verhindert werden.

Eine andere Vorgehensweise zeichnet sich dadurch aus, wenn das Dichtelement noch vor dem Einsetzen zumindest eines der Einsatzelemente oder vor dem Einsetzen des Einsatzelements mit den von diesem abstehenden Halteabschnitte in den Steckverbinderkörper in die teilweise von diesem definierte Aufnahmenut eingesetzt wird und erst nach dem Anordnen des Dichtelements zumindest eines der Einsatzelemente oder das Einsatzelement mit den von diesem abstehenden Halteabschnitte in den Einsatzelement-Halteabschnitt verbracht und anschließend das bereichsweise Einbetten in den umformbaren Kunststoffwerkstoff durchgeführt wird. Damit kann das Einsetzen des Dichtelements in die nur teilweise ausgebildete Aufnahmenut erleichtert werden.

Der erfindungsgemäß ausgebildete Steckverbinder dient zur Verbindung von Leitungen für flüssige und/oder gasförmige Medien mit einem zweiten Steckverbinder zur Bildung einer Steckerbaugruppe, der erste Steckverbinder umfasst
- einen Steckverbinderkörper, welcher Steckverbinderkörper rohrförmig sowie aus einem Kunststoffwerkstoff ausgebildet ist und einen Aufnahmeraum mit einer Längsachse definiert, und sich die Längsachse zwischen einem ersten Endbereich und einem zweiten Endbereich erstreckt, wobei vom Steckverbinderkörper eine erste Nutseitenfläche und zumindest ein Teilabschnitt einer Nutgrundfläche einer Aufnahmenut definiert ist,
- ein Einsatzelement, welches Einsatzelement zur Bildung der Aufnahmenut in den Aufnahmeraum eingesetzt ist, wobei eine zweite Nutseitenfläche vom Einsatzelement definiert ist und die zweite Nutseitenfläche dem ersten Endbereich näherliegend angeordnet ist als die erste Nutseitenfläche,
- ein Dichtelement, welches Dichtelement ringförmig ausgebildet und in die vom Steckverbinderkörper und dem Einsatzelement definierte Aufnahmenut eingesetzt und in Richtung der Längsachse positioniert gehalten ist, wobei weiters noch vorgesehen ist
- dass ein Einsatzelement-Halteabschnitt im Steckverbinderkörper vorgesehen oder ausgebildet ist, welcher Einsatzelement-Halteabschnitt anschließend an die Nutgrundfläche auf der von der ersten Nutseitenfläche abgewendeten Seite angeordnet oder ausgebildet ist und einen Innendurchmesser definiert,
- dass das Einsatzelement aus einem metallischen Werkstoff mit ferromagnetischen Eigenschaften gebildet ist,
- dass das Einsatzelement selbst oder zumindest jene vom Einsatzelement abstehenden Halteabschnitte mittels einer Induziervorrichtung und der von einem elektromagnetischen Feld erzeugten Energie zumindest bereichsweise in einem direkten Kontaktbereich mit dem Einsatzelement selbst oder zumindest bereichsweise in einem direkten Kontaktbereich mit den vom Einsatzelement abstehenden Halteabschnitten in den Kunststoffwerkstoff eingebettet und von Kunststoffwerkstoff formschlüssig gehalten ist oder gehalten sind.

Der dadurch erzielte Vorteil liegt darin, dass so mittels der auf Induktionsbasis erfolgenden Erwärmung des Einsatzelements dessen ortsfeste Positionierung und Halterung im Einsatzelement-Halteabschnitt rasch und kostengünstiger durchführbar ist. Durch die Wahl des dafür geeigneten Werkstoffs für das Einsatzelement und dessen gerichtete radiale Vorspannkraft noch vor dem teilweisen Eindringen desselben in den Kunststoffwerkstoff erfolgt ein selbsttätiges Aufweiten oder radiales Vergrößern der Außenabmessung in den partiell zumindest auf Umformtemperatur verbrachten Kunststoffwerkstoff.

Weiters kann es vorteilhaft sein, wenn der Einsatzelement-Halteabschnitt bezüglich des Innendurchmessers der Nutgrundfläche mit einem dazu größeren Innendurchmesser ausgebildet ist und zwischen dem Einsatzelement-Halteabschnitt und der Nutgrundfläche eine stufenförmige Stützfläche ausgebildet ist. Damit kann zumindest in eine Axialrichtung eine Anschlagfläche für das Einsatzelement geschaffen werden.

Eine andere Ausführungsform zeichnet sich dadurch aus, dass der Einsatzelement-Halteabschnitt mit einer Vielzahl von über den Umfang verteilt angeordneten Stegen ausgebildet ist. Durch die Wahl einer Mehrzahl an Stegen kann so die Masse des zu erweichenden Kunststoffmaterials in gewissen Grenzen reduziert werden. Darüber hinaus kann so aber auch ein gewisser Freiraum für den beim Eindringvorgang verdrängten Kunststoff geschaffen werden.

Eine weitere mögliche Ausführungsform hat die Merkmale, dass die Stege unmittelbar benachbart zueinander angeordnet sind und jeweils eine parallele Ausrichtung bezüglich der Längsachse aufweisen. Damit kann ein Verkeilen des Einsatzelement beim Einsetzvorgang leichter verhindert werden.

Eine weitere Ausbildung sieht vor, dass die Stege in Richtung der Längsachse gesehen jeweils mit einem Querschnitt ausgewählt aus der Gruppe von Formen eines Kreisabschnitts, eines Halbkreis-Abschnitts, eines Trapezes, eines Dreiecks ausgebildet sind. So kann die Kontaktfläche beim Einschieben des Einsatzelements verkleinert werden. Darüber hinaus kann so aber die Masse des im Kontaktbereich befindlichen Kunststoffs in gewissen Grenzen reduziert werden.

Eine andere Ausführungsform zeichnet sich dadurch aus, dass das Einsatzelement selbst in dessen unverformter Ausgangsstellung mit einem Außendurchmesser ausgebildet ist, der größer ist als der Innendurchmesser des Einsatzelement-Halteabschnitts oder dass zumindest die vom Einsatzelement abstehenden Halteabschnitte in deren unverformten Ausgangsstellung mit einer äußeren Umhüllenden ausgebildet werden, die größer ist als der Innendurchmesser des Einsatzelement-Halteabschnitts. Damit kann durch die dem Werkstoff des Einsatzelements innenwohnenden elastischen Eigenschaften nach dem Einsetzen in den Einsatzelement-Halteabschnitt die für den Eindringvorgang in das erweichte Kunststoffmaterial erforderliche Radialkraft aufgebaut werden.

Schließlich ist eine weitere bevorzugte Ausführungsform dadurch gekennzeichnet, dass das Einsatzelement mit den von diesem abstehenden Halteabschnitten einen über den Umfang durchgängig ausgebildeten Basiskörper in Form eines Kreisrings umfasst und die Halteabschnitte ausgehend vom Innenumfang des Basiskörpers auf die von der Längsachse abgewendete Seite ragend angeordnet sind. Durch die in Form von Flügeln vorragenden Halteabschnitte und die dem Werkstoff innenwohnenden elastischen Eigenschaften kann nach dem Einsetzen in den Einsatzelement-Halteabschnitt die für den Eindringvorgang in das erweichte Kunststoffmaterial erforderliche Radialkraft sicher aufgebaut werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Steckerbaugruppe mit Steckverbindern in deren noch voneinander beabstandeten Anordnung vor dem Fügen, in schaubildlicher Darstellung;
- Fig. 2: den Steckverbinderkörper nach Fig. 1, jedoch mit entferntem Einsatzelement, in schaubildlicher Darstellung;
- Fig. 3: ein vergrößertes Detail des Steckverbinderkörpers nach den Fig. 1 und 2, mit einer ersten Ausführungsform von Einsatzelementen zur Bildung der Aufnahmenut im Aufnahmeraum, im Axialschnitt;
- Fig. 4: ein vergrößertes Detail des Einsatzelement-Halteabschnitts, bei entferntem Einsatzelement, im Radialschnitt;
- Fig. 5: die erste Ausführungsform eines Einsatzelements alleinig, in dessen unverformter Ausgangsstellung, in schaubildlicher Darstellung;
- Fig. 6: ein zweites Ausführungsbeispiel eines Einsatzelements, in dessen im Einsatzelement-Halteabschnitt befindlichen vorgespannten Position der Halteabschnitte, noch vor der Durchführung der induktiven Erwärmung und des Eindringvorgangs der Halteabschnitte in den Kunststoffwerkstoff des Steckverbinderkörpers; in schaubildlicher Darstellung;
- Fig. 7: die zweite Ausführungsform eines Einsatzelements alleinig, in dessen unverformter Ausgangsstellung, in schaubildlicher Darstellung;
- Fig. 8: ein Detail des Steckverbinders nach den Fig. 6 und 7 mit in den Einsatzelement-Halteabschnitt eingedrungenen Halteabschnitten der zweiten Ausführungsform des Einsatzelements, im Axialschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

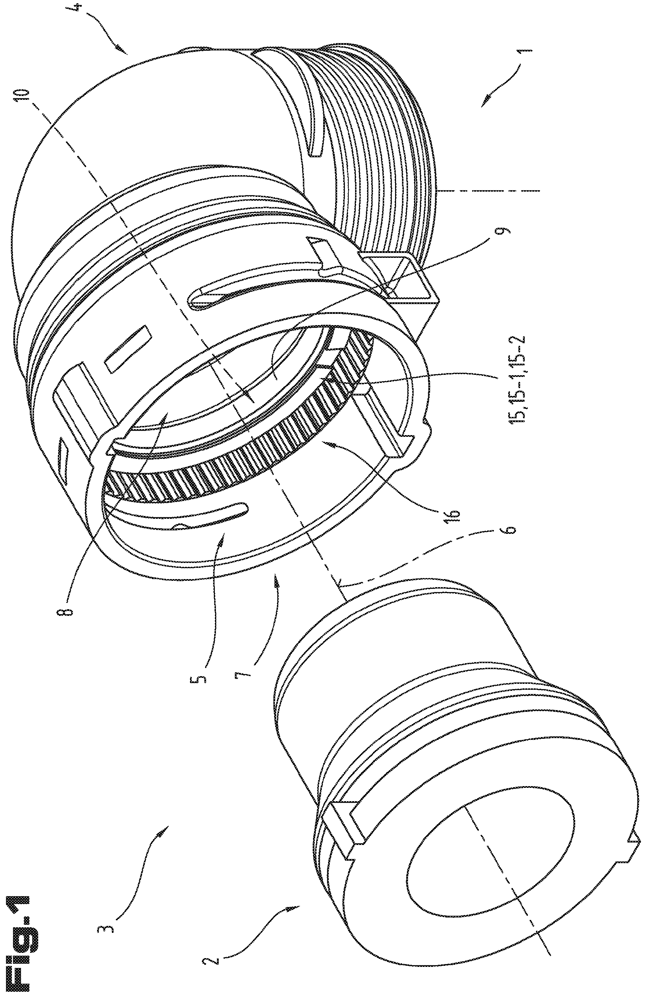

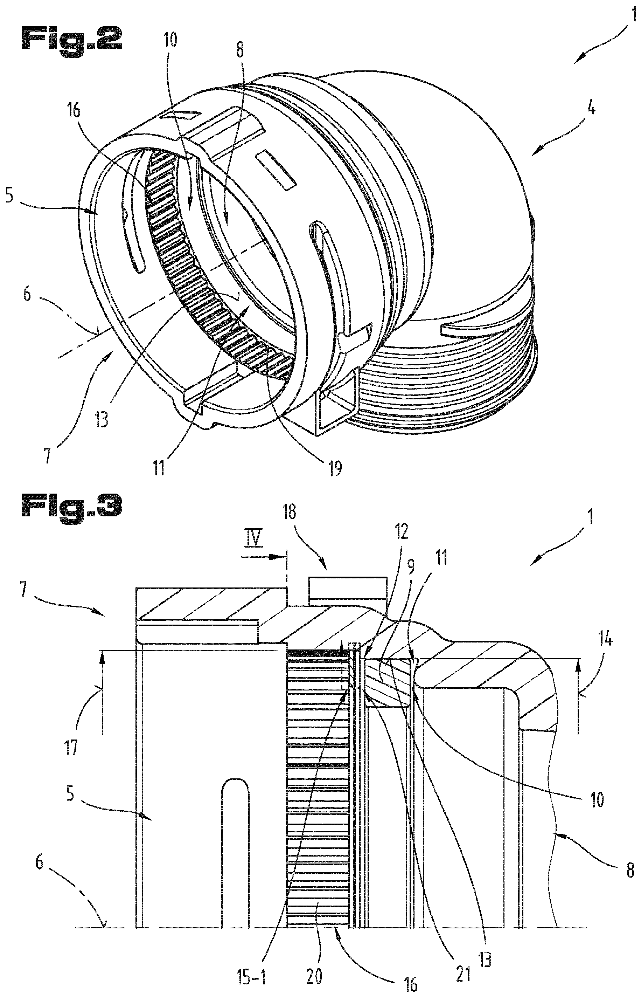

In der Fig. 1 sind ein erster Steckverbinder 1 und ein damit kuppelbarer zweiter Steckverbinder 2 vereinfacht dargestellt, welche zur Bildung einer Steckerbaugruppe 3 vorgesehen sind, wobei in den nachfolgenden Fig. 2 bis 5 ein erstes Ausführungsbeispiel detaillierter gezeigt und beschrieben ist. Die Steckverbinder 1, 2 dienen zur Verbindung von Leitungen für flüssige und/oder gasförmige Medien, insbesondere bei Kraftfahrzeugen.

In den Fig. 2 bis 5 ist ein erstes Ausführungsbeispiel des ersten Steckverbinders 1 näher gezeigt und beschrieben. Der erste Steckverbinder 1 umfasst einen rohrförmig ausgebildeten Steckverbinderkörper 4, der aus einem Kunststoffwerkstoff gebildet ist. Als Kunststoffwerkstoff wird bevorzugt ein solcher gewählt, welcher thermoplastische Eigenschaften aufweist und nach der Ausbildung des Steckverbinderkörpers 4 bei einer vorbestimmten Temperaturerhöhung oder Wärmeeinbringung zumindest teilweise oder abschnittsweise in einen umformbaren Aggregatzustand verbracht werden kann. Der Steckverbinderkörper 4 ist so ausgebildet, dass dieser bei diesem Ausführungsbeispiel und auch bei dem zweiten nachfolgend beschriebenen Ausführungsbeispiel gleichartig ausgebildet ist.

Der Steckverbinderkörper 4 bildet oder definiert unter anderem einen Aufnahmeraum 5 mit einer Längsachse 6, welche sich zumindest zwischen einem ersten Endbereich 7 und einem zweiten Endbereich 8 desselben erstreckt. Im Aufnahmeraum 5 ein Dichtelement 9 aufgenommen oder angeordnet, welches in einer dafür ausgebildeten Aufnahmenut 10 aufgenommen und in Axialrichtung gehalten ist.

Die Aufnahmenut 10 ist ihrerseits von einer ersten Nutseitenfläche 11 und einer in Axialrichtung davon beabstandeten zweiten Nutseitenfläche 12 in Richtung der Längsachse 6 begrenzt. Die Aufnahmenut 10 umfasst weiters eine Nutgrundfläche 13, welche zumindest in einem Teilabschnitt direkt vom Steckverbinderkörper 4 gebildet ist und einen Innendurchmesser 14 aufweist oder definiert. Die erste Nutseitenfläche 11, welche in Einschubrichtung gesehen weiter vom ersten Endbereich 7 beabstandet angeordnet ist als die zweite Nutseitenfläche 12, ist ebenfalls direkt vom Steckverbinderkörper 4 ausgebildet.

Zur Bildung oder Definition der zweiten Nutseitenfläche 12 ist ein allgemein als Einsatzelement 15 bezeichneter Bauteil vorgesehen. Da unterschiedliche Ausbildungen und Ausführungsformen des Einsatzelements 15 vorgesehen sind, werden diese grundsätzlich mit dem Bezugszeichen 15 und einer nachfolgenden Ziffer zu deren Unterscheidung bezeichnet. Die zweite Nutseitenfläche 12 ist dem ersten Endbereich 7 des Steckverbinderkörpers 4 näherliegend angeordnet als die erste Nutseitenfläche 11.

Das Einsatzelement 15 ist aus einem metallischen Werkstoff mit ferromagnetischen Eigenschaften gebildet, um so mittels einer Induziervorrichtung 18 und der von einem elektromagnetischen Feld erzeugten Energie bei Bedarf erwärmt oder erhitzt werden zu können.

Weiters ist zumindest ein Einsatzelement-Halteabschnitt 16 im Steckverbinderkörper 4 vorgesehen, welcher zur Anordnung und Halterung des Einsatzelements 15 zumindest in einer Axialrichtung ausgebildet ist. Der Einsatzelement-Halteabschnitt 16 ist anschließend an die Nutgrundfläche 13 auf der von der ersten Nutseitenfläche 11 abgewendeten Seite angeordnet oder ausgebildet und somit dem ersten Endbereich 7 zugewendet oder näherliegend als die erste Nutseitenfläche 11. Von dem Einsatzelement-Halteabschnitt 16 wird ein Innendurchmesser 17 definiert. Der Innendurchmesser 17 des Einsatzelement-Halteabschnitts 16 ist so gewählt, dass dieser größer ausgebildet ist als der Innendurchmesser 14 der Nutgrundfläche 13. Aufgrund dieses Durchmesserunterschieds ist zwischen dem Einsatzelement-Halteabschnitt 16 und der Nutgrundfläche 13 eine stufenförmig verlaufende Stützfläche 19 ausgebildet. Bevorzugt weist diese eine normale Ausrichtung bezüglich der Längsachse 6 auf. Weiters kann die Stützfläche 19 als Axialanschlag in Richtung auf die erste Nutseitenfläche 11 dienen, an welcher das Einsatzelement 15 zur Anlage gebracht werden kann.

Der Einsatzelement-Halteabschnitt 16 kann weiters eine Vielzahl von über den Umfang verteilt angeordnete Stege 20 umfassen. Jene der Längsachse 6 zugewendeten Stegflächen definieren den zuvor beschriebenen Innendurchmesser 17 des Einsatzelement-Halteabschnitts 16. Die einzelnen Stege 20 können bevorzugt unmittelbar benachbart zueinander angeordnet sein und jeweils eine parallele Ausrichtung bezüglich der Längsachse 6 aufweisen. Weiters können die Stege 20 in Richtung der Längsachse 6 gesehen jeweils mit einem Querschnitt ausgebildet werden, der in Richtung auf die Längsachse 6 abnehmend ausgebildet ist. Der Querschnitt kann aus der Gruppe von Formen eines Kreisabschnitts, eines Halbkreis-Abschnitts, eines Trapezes, eines Dreiecks ausgewählt sein. Im gezeigten Ausführungsbeispiel ist ein Trapez gezeigt. Zwischen den einzelnen Stegen 20 kann in Umfangsrichtung gesehen jeweils ein geringfügiger Freiraum vorgesehen sein, um so eine Beabstandung zu erzielen.

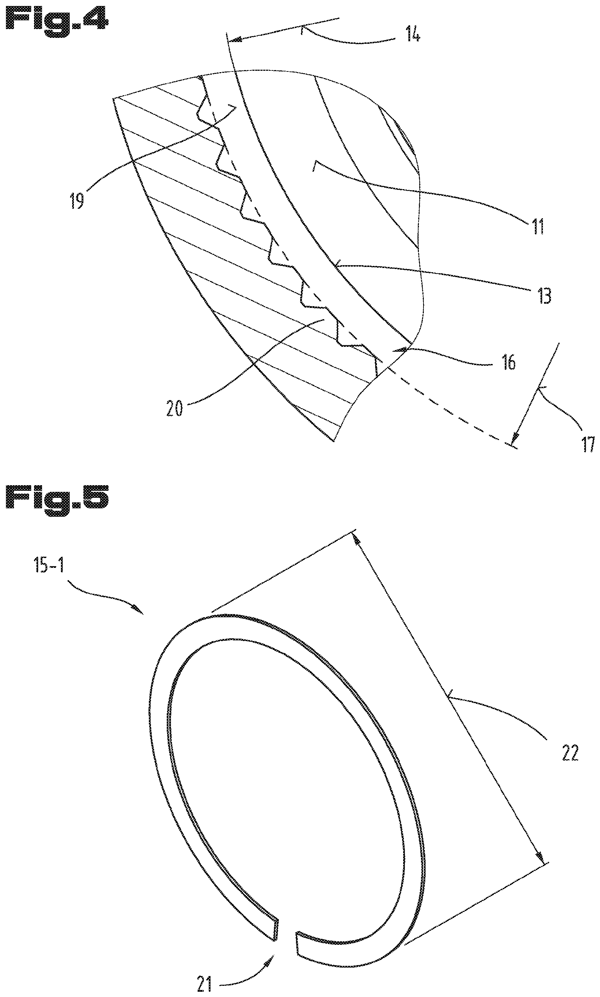

In der Fig. 5 ist das Einsatzelement 15 mit dem Zusatz "-1" als erste mögliche Ausbildung desselben in schaubildlicher Darstellung gezeigt. Bei diesem Ausführungsbeispiel ist das Einsatzelement 15-1 selbst in Richtung der Längsachse 6 gesehen als ein nahezu über den Umfang durchlaufender Kreisringabschnitt mit einer einzigen Unterbrechungsstelle 21 ausgebildet.

Weiters kann noch vorgesehen sein, dass zum gegenseitigen Abdecken von den Unterbrechungsstellen 21 zwei zueinander gleichartig ausgebildete Einsatzelement 15-1 unmittelbar benachbart zueinander im Einsatzelement-Halteabschnitt 16 angeordnet sind, wie dies am besten aus der Fig. 3 zu ersehen ist. Weiters ist noch in vollen Linien die vorgespannte Stellung mit der nach außen in Radialrichtung wirkenden Druckkraft dargestellt. In strichlierten Linien ist die in das Kunststoffmaterial eingedrungene Stellung der beiden Einsatzelement 15-1 angedeutet.

Die beiden Unterbrechungsstellen 21 werden bevorzugt zueinander in einer umfangsmäßig versetzten Anordnung angeordnet. So können die beiden Unterbrechungsstellen 21 um einen Winkel mit einem Winkelwert zueinander versetzt angeordnet werden, der aus einem Winkel-Wertebereich stammt, dessen untere Grenze 150°, insbesondere 170°, und dessen obere Grenze 210°, insbesondere 190°, beträgt. Besonders bevorzugt weist der Winkelversatz zueinander einen Winkel mit einem Wert von 180° auf.

Das oder die Einsatzelemente 15-1 selbst weisen in deren unverformten Ausgangsstellung einen Außendurchmesser 22 auf, der größer ist als der Innendurchmesser 17 des Einsatzelement-Halteabschnitts 16. Weiters ist der Werkstoff derart gewählt, dass dieser federelastische Eigenschaften für eine elastische Verformungsbewegung zumindest in radialer Richtung aufweist. Dadurch wird es möglich, das oder die Einsatzelemente 15-1 selbst mit einer auf die von der Längsachse 6 abgewendeten Seite ausgerichteten Radialkraft gegen den Einsatzelement-Halteabschnitt 16 anzulegen.

Ist dies erfolgt, wird von der Induziervorrichtung 18 mittels der von einem elektromagnetischen Feld erzeugten Energie im zumindest einen Einsatzelement 15-1 selbst ein Strom induziert und damit der Werkstoff des Einsatzelements 15-1 selbst auf eine Temperatur zumindest oberhalb der Erweichungstemperatur des Kunststoffwerkstoffs des Steckverbinderkörpers 4 erwärmt. Aufgrund dieser Erwärmung und Temperaturerhöhung wird der Kunststoffwerkstoff zumindest in einem direkten Kontaktbereich mit dem Einsatzelement 15-1 selbst in einen umformbaren Aggregatzustand überführt.

Da das zumindest eine Einsatzelement 15-1 selbst in einem in Radialrichtung vorgespannten Zustand im Einsatzelement-Halteabschnitt 16 angeordnet ist, und das Kunststoffmaterial oder der Kunststoffwerkstoff zumindest im direkten Kontaktbereich mit dem Einsatzelement 15-1 selbst soweit erweicht ist, dass sich das zumindest eine Einsatzelement 15-1 selbst in radialer Richtung ausdehnen kann und mittels der aufgebauten Radialkraft in den umformbaren Kunststoffwerkstoff abschnittsweise eindringen kann und bereichsweise eingebettet wird.

Ist das Eindringen und teilweise Einbetten erfolgt, kann die die Induziervorrichtung 18 und das von dieser erzeugte elektromagnetische Feld deaktiviert werden, wodurch der Induktionsvorgang und damit die Energieerzeugung beendet wird. Nach dem Unterschreiten der Erweichungstemperatur verfestigt sich der zuvor in seinem umformbaren Aggregatzustand befindliche Kunststoffwerkstoff. Damit wird in weiterer Folge das zumindest eine Einsatzelement 15-1 selbst vom Kunststoffwerkstoff formschlüssig gehalten.

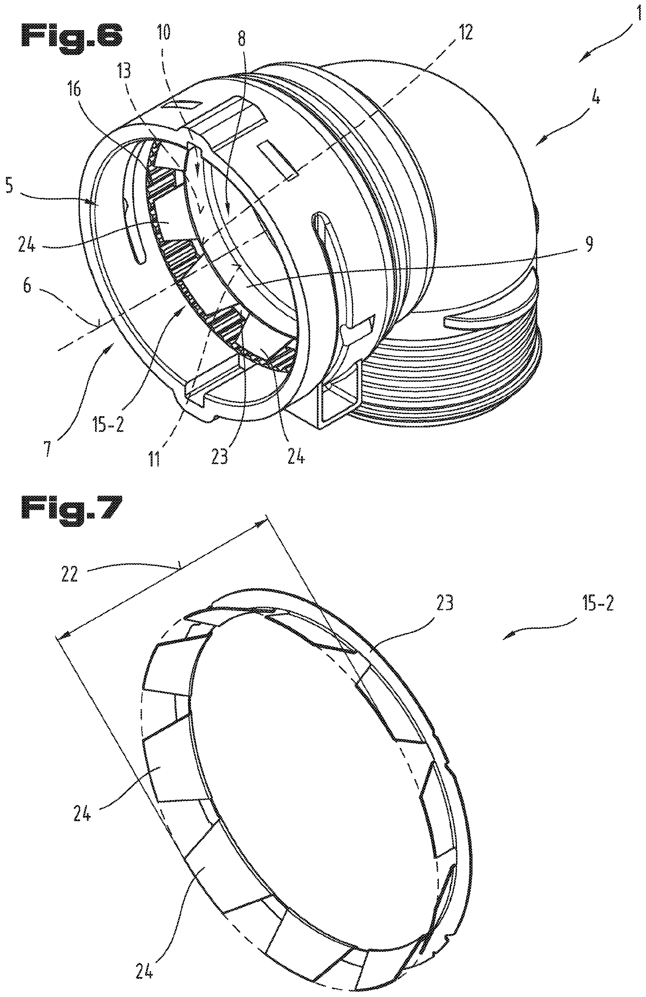

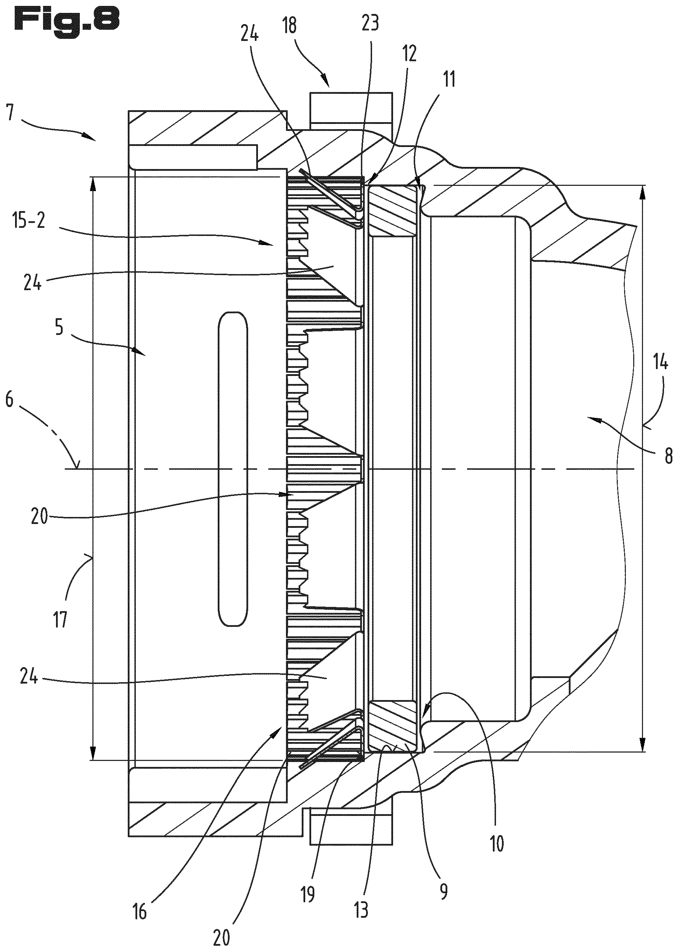

Das Einbringen und Anordnen des Dichtelements 9 kann erst nach dem ortsfesten Positionieren zumindest eines der Einsatzelemente 15-1 und dem Ausbilden der Aufnahmenut 10 in die Aufnahmenut 10 eingesetzt werden. Gleiche gilt aber auch für das nachfolgend beschriebene Ausführungsbeispiel gemäß der Fig. 6 bis 8.

Unabhängig davon wäre es aber auch möglich, das Dichtelement 9 noch vor dem Einsetzen zumindest eines der Einsatzelemente 15-1 in den Steckverbinderkörper 4 in die teilweise von diesem definierte Aufnahmenut 10 einzusetzen und erst nach dem Anordnen des Dichtelements 9 zumindest eines der Einsatzelemente 15-1 in den Einsatzelement-Halteabschnitt 16 zu verbringen und anschließend das bereichsweise Einbetten in den umformbaren Kunststoffwerkstoff durchzuführen. Gleiche gilt aber auch für das nachfolgend beschriebene Ausführungsbeispiel gemäß der Fig. 6 bis 8.

In den Fig. 6 bis 8 ist ein weiteres Ausführungsbeispiel des Einsatzelements 15 gezeigt und beschrieben, welches zu Unterscheidung mit der Ziffer "-2" als Nachsatz versehen ist, und ebenfalls im Bereich des Einsatzelement-Halteabschnitts 16 angeordnet ist. Das durch die Induktionseinwirkung der Induziervorrichtung 18 erwärmte Einsatzelement 15-2 verbringt auch hier in weiterer Folge den Kunststoffwerkstoff zumindest auf seine Umformtemperatur. Es werden wiederum für gleiche Teile gleiche Bezugszeichen bzw. Bauteilbezeichnungen wie in den vorangegangenen Fig. 1 bis 5 verwendet. Um unnötige Wiederholungen zu vermeiden, wird auf die detaillierte Beschreibung in den vorangegangenen Fig. Fig. 1 bis 5 hingewiesen bzw. Bezug genommen.

Das hier gezeigte Einsatzelement 15-2 umfasst einen über den Umfang durchgängig ausgebildeten Basiskörper 23 in Form eines Kreisrings. In diesem Fall bildet oder definiert der Basiskörper 23 die zweite Nutseitenfläche 12 der Aufnahmenut 10. Weiters sind noch eigene und am Basiskörper 23 angeordnete Halteabschnitte 24 vorgesehen, welche bevorzugt einen integralen Bestandteil des Einsatzelements 15-2 bilden. Die einzelnen Halteabschnitte 24 sind bevorzugt gemeinsam mit dem Basiskörper 23 aus einem Stück hergestellt, insbesondere mittels eines Stanz- und Umformvorgangs. Die Halteabschnitte 24 ihrerseits ragen ausgehend vom Innenumfang des Basiskörpers 23 auf die von der Längsachse 6 abgewendete Seite vom Basiskörper 23 weg - siehe dazu die Darstellung der Fig. 7. Damit weisen die Halteabschnitte 24 eine schräg nach außen gerichtet Längserstreckung auf und überragen in deren unverformten Ausgangsstellung bevorzugt den Außenumfang des Basiskörpers 23 in radialer Richtung. Der Außendurchmesser des Basiskörpers 23 weist eine Größe auf, welche in etwa dem Innendurchmesser 17 des Einsatzelement-Halteabschnitts 16 entspricht. Bevorzugt ist der Außendurchmesser gleich oder geringfügig kleiner gewählt als der Innendurchmesser 17 des Einsatzelement-Halteabschnitts 16. Die einzelnen über den Umfang verteilt angeordneten Halteabschnitte 24 sind in deren unverformten Ausgangsstellung von einer äußeren Umhüllenden umgeben. Die äußere Umhüllende um die Halteabschnitte 24 weist einen Durchmesser auf, der größer ist als der Innendurchmesser 17 des Einsatzelement-Halteabschnitts 16.

Nachfolgend wird analog zum ersten Ausführungsbeispiel der Ablauf der Befestigungsschritte beschrieben, wobei es sich nach dem Positionieren des Einsatzelements 15-2 mit den von diesem abstehenden Halteabschnitten 24 grundsätzlich um die selben Arbeitsschritte handelt.

Die mehreren vom Einsatzelement 15-2 abstehenden Halteabschnitte 24 weisen jeweils in deren unverformten Ausgangsstellung einen Außendurchmesser bzw. die äußere Umhüllende auf, welcher oder welche größer ist als der Innendurchmesser 17 des Einsatzelement-Halteabschnitts 16.

Damit wird es möglich, das Einsatzelement 15-2 mit den Halteabschnitten 24 unter einer radialen Vorspannung im Einsatzelement-Halteabschnitt 16 anzuordnen. So werden auch die mehreren vom Einsatzelement 15-2 abstehenden Halteabschnitte 24 jeweils mit einer auf die von der Längsachse 6 abgewendeten Seite ausgerichteten Radialkraft gegen den Einsatzelement-Halteabschnitt 16 angelegt oder angedrückt.

Ist dies erfolgt, werden zumindest jene vom Einsatzelement 15-2 abstehenden Halteabschnitte 24 mittels der Induziervorrichtung 18 und der von einem elektromagnetischen Feld erzeugten Energie auf eine Temperatur zumindest oberhalb der Erweichungstemperatur des Kunststoffwerkstoffs des Steckverbinderkörpers 4 erwärmt. Aufgrund der Temperaturerhöhung des Kunststoffwerkstoffs wird dieser zumindest in einem direkten Kontaktbereich mit den vom Einsatzelement 15-2 abstehenden Halteabschnitten 24 in einen umformbaren Aggregatzustand überführt oder verbracht. Durch die zuvor beschriebene aufgebaute Radialkraft der Halteabschnitte 24, dringen diese in den umformbaren Kunststoffwerkstoff abschnittsweise ein und werden in diesem eingebettet.

Ist dies erfolgt, wird die Induziervorrichtung 18 und das von dieser erzeugte elektromagnetische Feld deaktiviert. Damit wird die Energieerzeugung beendet und der dabei induzierte Strom abgeschaltet. So kann sich der Kunststoffwerkstoff von seinem bereichsweise umformbaren Aggregatzustand abkühlen und damit verfestigen. Die nun in den Kunststoffwerkstoff eingedrungenen Halteabschnitte 24 des Einsatzelements 15-2 werden vom verfestigten Kunststoffwerkstoff formschlüssig und positioniert gehalten.

Die zuvor beschriebene und zwischen dem Einsatzelement-Halteabschnitt 16 und der Nutgrundfläche 13 angeordnete Stützfläche 19 kann als Axialanschlag für zumindest eines der Einsatzelemente 15-1 selbst oder den Basiskörper 23 der weiteren Ausführungsform des Einsatzelements 15-2 dienen.

Bei dem Ausführungsbeispiel des Einsatzelements 15-2 mit den Halteabschnitten 24 wird zumeist der Basiskörper 23 nicht in den Kunststoffwerkstoff eingebettet, sondern nur die Halteabschnitte 24. Das Einsatzelement 15-2 wird von den einzelnen Halteabschnitten 24 in axialer Richtung auf die von der Aufnahmenut 10 abgewendete Seite oder Richtung am Steckverbinderkörper 4 abgestützt. Auf die davon abgewendete Seite oder in die davon abgewendete Richtung - als in Richtung auf die Aufnahmenut 10 - wird der Axialanschlag von der Stützfläche 19 für das Einsatzelement 15-2, insbesondere dessen Basiskörper 23, gebildet.

Durch die auf induktiver Basis erfolgte Erwärmung des Einsatzelements 15-1 selbst oder der vom Basiskörper 23 des Einsatzelements 15-2 abstehenden Halteabschnitte 24 kann so eine einfache und wirtschaftliche Ausbildung der Aufnahmenut 10 durchgeführt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Steckverbinder
- 2: Steckverbinder
- 3: Steckerbaugruppe
- 4: Steckverbinderkörper
- 5: Aufnahmeraum
- 6: Längsachse
- 7: erster Endbereich
- 8: zweiter Endbereich
- 9: Dichtelement
- 10: Aufnahmenut
- 11: erste Nutseitenfläche
- 12: zweite Nutseitenfläche
- 13: Nutgrundfläche
- 14: Innendurchmesser
- 15: Einsatzelement
- 16: Einsatzelement-Halteabschnitt
- 17: Innendurchmesser
- 18: Induziervorrichtung
- 19: Stützfläche
- 20: Steg
- 21: Unterbrechungsstelle
- 22: Außendurchmesser
- 23: Basiskörper
- 24: Halteabschnitt

## Patentansprüche

1. Verfahren zur Bildung eines ersten Steckverbinders (1), welcher erste Steckverbinder (1) zur Verbindung von Leitungen für flüssige und/oder gasförmige Medien mit einem zweiten Steckverbinder (2) ausgebildet ist und zur Bildung einer Steckerbaugruppe (3) vorgesehen ist, bei dem folgende Schritte durchgeführt werden
- Bereitstellen eines rohrförmig ausgebildeten Steckverbinderkörpers (4), der aus einem Kunststoffwerkstoff gebildet ist und einen Aufnahmeraum (5) mit einer Längsachse (6) definiert, und sich die Längsachse (6) zwischen einem ersten Endbereich (7) und einem zweiten Endbereich (8) erstreckt, wobei vom Steckverbinderkörper (4) eine erste Nutseitenfläche (11) und zumindest ein Teilabschnitt einer Nutgrundfläche (13) einer Aufnahmenut (10) mit einem Innendurchmesser (14) definiert wird,
- Bereitstellen eines Einsatzelements (15, 15-1, 15-2), welches Einsatzelement (15, 15-1, 15-2) zur Bildung der Aufnahmenut (10) in einer Einschubrichtung gesehen in den Aufnahmeraum (5) eingesetzt ist, wobei eine zweite Nutseitenfläche (12) vom Einsatzelement (15, 15-1, 15-2) definiert ist und die zweite Nutseitenfläche (12) dem ersten Endbereich (7) in Einschubrichtung gesehen näherliegend angeordnet ist als die erste Nutseitenfläche (11),
- Bereitstellen eines Dichtelements (9), welches Dichtelement (9) ringförmig ausgebildet und in die vom Steckverbinderkörper (4) und dem Einsatzelement (15, 15-1, 15-2) definierte oder definierbare Aufnahmenut (10) eingesetzt und in Richtung der Längsachse (6) positioniert gehalten wird,
wobei ein Einsatzelement-Halteabschnitt (16) im Steckverbinderkörper (4) vorgesehen wird, welcher Einsatzelement-Halteabschnitt (16) anschließend an die Nutgrundfläche (13) auf der von der ersten Nutseitenfläche (11) abgewendeten Seite angeordnet oder ausgebildet ist und einen Innendurchmesser (17) definiert,
**dadurch gekennzeichnet,**
- **dass** das Einsatzelement (15, 15-1, 15-2) aus einem metallischen Werkstoff mit ferromagnetischen Eigenschaften gebildet ist,
- **dass** das Einsatzelement (15-1) selbst oder mehrere vom Einsatzelement (15-2) abstehende Halteabschnitte (24) jeweils mit einer auf die von der Längsachse (6) abgewendeten Seite ausgerichteten Radialkraft gegen den Einsatzelement-Halteabschnitt (16) angelegt wird oder werden,
- **dass** das Einsatzelement (15-1) selbst oder zumindest jene vom Einsatzelement (15-2) abstehenden Halteabschnitte (24) von der von einem elektromagnetischen Feld mittels einer Induziervorrichtung (18) erzeugten Energie auf eine Temperatur zumindest oberhalb der Erweichungstemperatur des Kunststoffwerkstoffs des Steckverbinderkörpers (4) erwärmt wird oder werden,
- **dass** der Kunststoffwerkstoff zumindest in einem direkten Kontaktbereich mit dem Einsatzelement (15-1) selbst oder zumindest in einem direkten Kontaktbereich mit den vom Einsatzelement (15-2) abstehenden Halteabschnitten (24) in einen umformbaren Aggregatzustand überführt wird, und
- **dass** das Einsatzelement (15-1) selbst mittels der aufgebauten Radialkraft in den umformbaren Kunststoffwerkstoff abschnittsweise eindringt und bereichsweise eingebettet wird oder dass die vom Einsatzelement (15-2) abstehenden Halteabschnitte (24) mittels der aufgebauten Radialkraft in den umformbaren Kunststoffwerkstoff abschnittsweise eindringen und bereichsweise eingebettet werden.

2. Verfahren nach Anspruch 1, **dadurch gekennzeichnet, dass** die Induziervorrichtung (18) und das von dieser erzeugte elektromagnetische Feld deaktiviert und damit die Energieerzeugung beendet wird, und nach dem Unterschreiten der Erweichungstemperatur sich der zuvor in seinem umformbaren Aggregatzustand befindliche Kunststoffwerkstoff verfestigt und das Einsatzelement (15-1) selbst oder zumindest jene vom Einsatzelement (15-2) abstehenden Halteabschnitte (24) im Einsatzelement-Halteabschnitt (16) vom Kunststoffwerkstoff formschlüssig gehalten wird oder werden.

3. Verfahren nach Anspruch 1 oder 2, **dadurch gekennzeichnet, dass** der Einsatzelement-Halteabschnitt (16) bezüglich des Innendurchmessers (14) der Nutgrundfläche (13) mit einem dazu größeren Innendurchmesser (17) ausgebildet wird und zwischen dem Einsatzelement-Halteabschnitt (16) und der Nutgrundfläche (13) eine stufenförmige Stützfläche (19) ausgebildet wird.

4. Verfahren nach einem der vorhergehenden Ansprüche, **dadurch gekennzeichnet, dass** der Einsatzelement-Halteabschnitt (16) mit einer Vielzahl von über den Umfang verteilt angeordneten Stegen (20) ausgebildet wird.

5. Verfahren nach Anspruch 4, **dadurch gekennzeichnet, dass** die Stege (20) unmittelbar benachbart zueinander angeordnet werden und jeweils eine parallele Ausrichtung bezüglich der Längsachse (6) aufweisen.

6. Verfahren nach Anspruch 4 oder 5, **dadurch gekennzeichnet, dass** die Stege (20) in Richtung der Längsachse (6) gesehen jeweils mit einem Querschnitt ausgewählt aus der Gruppe von Formen eines Kreisabschnitts, eines Halbkreis-Abschnitts, eines Trapezes, eines Dreiecks ausgebildet werden.

7. Verfahren nach einem der vorhergehenden Ansprüche, **dadurch gekennzeichnet, dass** das Einsatzelement (15-1) selbst in Richtung der Längsachse (6) gesehen als ein nahezu über den Umfang durchlaufender Kreisringabschnitt mit einer Unterbrechungsstelle (21) ausgebildet wird.

8. Verfahren nach Anspruch 7, **dadurch gekennzeichnet, dass** zwei Einsatzelemente (15-1) bereitgestellt werden, welche Einsatzelemente (15-1) zueinander gleichartig ausgebildet sind, und die beiden Einsatzelemente (15-1) unmittelbar benachbart zueinander mit einer bezüglich der beiden Unterbrechungsstellen (21) zueinander umfangsmäßig versetzten Anordnung angeordnet werden.

9. Verfahren nach Anspruch 7 oder 8, **dadurch gekennzeichnet, dass** die beiden Unterbrechungsstellen (21) um einen Winkel mit einem Winkelwert zueinander versetzt angeordnet werden, der aus einem Winkel-Wertebereich stammt, dessen untere Grenze 150°, insbesondere 170°, und dessen obere Grenze 210°, insbesondere 190°, beträgt.

10. Verfahren nach einem der vorhergehenden Ansprüche, **dadurch gekennzeichnet, dass** das Einsatzelement (15-1) selbst in dessen unverformter Ausgangsstellung mit einem Außendurchmesser (22) ausgebildet wird, der größer ist als der Innendurchmesser (17) des Einsatzelement-Halteabschnitts (16) oder dass zumindest die vom Einsatzelement (15-2) abstehenden Halteabschnitte (24) in deren unverformten Ausgangsstellung mit einer äußeren Umhüllenden ausgebildet werden, die größer ist als der Innendurchmesser (17) des Einsatzelement-Halteabschnitts (16).

11. Verfahren nach einem der vorhergehenden Ansprüche, **dadurch gekennzeichnet, dass** das Einsatzelement (15-2) mit den von diesem abstehenden Halteabschnitten (24) einen über den Umfang durchgängig ausgebildeten Basiskörper (23) in Form eines Kreisrings umfasst und die Halteabschnitte (24) ausgehend vom Innenumfang des Basiskörpers (23) auf die von der Längsachse (6) abgewendete Seite ragend angeordnet werden.

12. Verfahren nach einem der vorhergehenden Ansprüche, **dadurch gekennzeichnet, dass** das Dichtelement (9) erst nach dem ortsfesten Positionieren zumindest eines der Einsatzelemente (15-1) oder nach dem ortsfesten Positionieren des Einsatzelements (15-2) mit den von diesem abstehenden Halteabschnitte (24) und dem Ausbilden der Aufnahmenut (10) in die Aufnahmenut (10) eingesetzt wird.

13. Verfahren nach einem der Anspruch 1 bis 11, **dadurch gekennzeichnet, dass** das Dichtelement (9) noch vor dem Einsetzen zumindest eines der Einsatzelemente (15-1) oder vor dem Einsetzen des Einsatzelements (15) mit den von diesem abstehenden Halteabschnitte (24) in den Steckverbinderkörper (4) in die teilweise von diesem definierte Aufnahmenut (10) eingesetzt wird und erst nach dem Anordnen des Dichtelements (9) zumindest eines der Einsatzelemente (15-1) oder das Einsatzelement (15) mit den von diesem abstehenden Halteabschnitte (24) in den Einsatzelement-Halteabschnitt (16) verbracht und anschließend das bereichsweise Einbetten in den umformbaren Kunststoffwerkstoff durchgeführt wird.

14. Steckverbinder (1) zur Verbindung von Leitungen für flüssige und/oder gasförmige Medien mit einem zweiten Steckverbinder (2) zur Bildung einer Steckerbaugruppe (3), der erste Steckverbinder (1) umfasst
- einen Steckverbinderkörper (4), welcher Steckverbinderkörper (4) rohrförmig sowie aus einem Kunststoffwerkstoff ausgebildet ist und einen Aufnahmeraum (5) mit einer Längsachse (6) definiert, und sich die Längsachse (6) zwischen einem ersten Endbereich (7) und einem zweiten Endbereich (8) erstreckt, wobei vom Steckverbinderkörper (4) eine erste Nutseitenfläche (11) und zumindest ein Teilabschnitt einer Nutgrundfläche (13) einer Aufnahmenut (10) definiert ist,
- ein Einsatzelement (15), welches Einsatzelement (15) zur Bildung der Aufnahmenut (10) in den Aufnahmeraum (5) eingesetzt ist, wobei eine zweite Nutseitenfläche (12) vom Einsatzelement (15) definiert ist und die zweite Nutseitenfläche (12) dem ersten Endbereich (7) in Einschubrichtung gesehen näherliegend angeordnet ist als die erste Nutseitenfläche (11),
- ein Dichtelement (9), welches Dichtelement (9) ringförmig ausgebildet und in die vom Steckverbinderkörper (4) und dem Einsatzelement (15) definierte Aufnahmenut (10) eingesetzt und in Richtung der Längsachse (6) positioniert gehalten ist, insbesondere hergestellt unter Anwendung des Verfahrens nach einem der vorhergehenden Ansprüche, wobei,
- ein Einsatzelement-Halteabschnitt (16) im Steckverbinderkörper (4) vorgesehen ist, welcher Einsatzelement-Halteabschnitt (16) anschließend an die Nutgrundfläche (13) auf der von der ersten Nutseitenfläche (11) abgewendeten Seite angeordnet oder ausgebildet ist und einen Innendurchmesser (17) definiert, **dadurch gekennzeichnet,**
- **dass** das Einsatzelement (15) aus einem metallischen Werkstoff mit ferromagnetischen Eigenschaften gebildet ist,
- **dass** das Einsatzelement (15) selbst oder zumindest jene vom Einsatzelement (15) abstehenden Halteabschnitte (24) mittels einer Induziervorrichtung (18) und der von einem elektromagnetischen Feld erzeugten Energie zumindest bereichsweise in einem direkten Kontaktbereich mit dem Einsatzelement (15) selbst oder zumindest bereichsweise in einem direkten Kontaktbereich mit den vom Einsatzelement (15) abstehenden Halteabschnitten (24) in den Kunststoffwerkstoff eingebettet und von Kunststoffwerkstoff formschlüssig gehalten ist oder gehalten sind.

15. Steckverbinder (1) nach Anspruch 14, **dadurch gekennzeichnet, dass** der Einsatzelement-Halteabschnitt (16) bezüglich des Innendurchmessers der Nutgrundfläche (13) mit einem dazu größeren Innendurchmesser (17) ausgebildet ist und zwischen dem Einsatzelement-Halteabschnitt (16) und der Nutgrundfläche (13) eine stufenförmige Stützfläche (19) ausgebildet ist.

16. Steckverbinder (1) nach Anspruch 14 oder 15, **dadurch gekennzeichnet, dass** der Einsatzelement-Halteabschnitt (16) mit einer Vielzahl von über den Umfang verteilt angeordneten Stegen (20) ausgebildet ist.

17. Steckverbinder (1) nach Anspruch 16, **dadurch gekennzeichnet, dass** die Stege (20) unmittelbar benachbart zueinander angeordnet sind und jeweils eine parallele Ausrichtung bezüglich der Längsachse (6) aufweisen.

18. Steckverbinder (1) nach Anspruch 16 oder 17, **dadurch gekennzeichnet, dass** die Stege (20) in Richtung der Längsachse (6) gesehen jeweils mit einem Querschnitt ausgewählt aus der Gruppe von Formen eines Kreisabschnitts, eines Halbkreis-Abschnitts, eines Trapezes, eines Dreiecks ausgebildet sind.

19. Steckverbinder (1) nach einem der Ansprüche 14 bis 18, **dadurch gekennzeichnet, dass** das Einsatzelement (15) selbst in dessen unverformter Ausgangsstellung mit einem Außendurchmesser (22) ausgebildet ist, der größer ist als der Innendurchmesser (17) des Einsatzelement-Halteabschnitts (16) oder dass zumindest die vom Einsatzelement (15) abstehenden Halteabschnitte (24) in deren unverformten Ausgangsstellung mit einer äußeren Umhüllenden ausgebildet werden, die größer ist als der Innendurchmesser (17) des Einsatzelement-Halteabschnitts (16).

20. Steckverbinder (1) nach einem der Ansprüche 14 bis 19, **dadurch gekennzeichnet, dass** das Einsatzelement (15) mit den von diesem abstehenden Halteabschnitten (24) einen über den Umfang durchgängig ausgebildeten Basiskörper (23) in Form eines Kreisrings umfasst und die Halteabschnitte (24) ausgehend vom Innenumfang des Basiskörpers (23) auf die von der Längsachse (6) abgewendete Seite ragend angeordnet sind.

## Claims

1. A method for forming a first plug connector (1), which first plug connector (1) is configured for connecting lines for liquid and/or gaseous media to a second plug connector (2) and is provided for forming a plug assembly (3), in which the following steps are carried out
- providing a tubularly configured plug connector body (4), which is formed from a plastic material and defines a receiving space (5) with a longitudinal axis (6), and the longitudinal axis (6) extends between a first end region (7) and a second end region (8), wherein a first groove side surface (11) and at least a partial section of a groove base surface (13) of a receiving groove (10) with an internal diameter (14) are defined by the plug connector body (4),
- providing an insert element (15, 15-1, 15-2), which insert element (15, 15-1, 15-2) is inserted into the receiving space (5) as viewed in an insertion direction to form the receiving groove (10), wherein a second groove side surface (12) is defined by the insert element (15, 15-1, 15-2) and the second groove side surface (12) is arranged closer to the first end region (7) as viewed in the insertion direction than the first groove side surface (11),
- providing a sealing element (9), which sealing element (9) is configured annularly and is inserted into the receiving groove (10) defined or definable by the plug connector body (4) and the insert element (15, 15-1, 15-2), and is held in position in the direction of the longitudinal axis (6),
wherein an insert element holding section (16) is provided in the plug connector body (4), which insert element holding section (16) is arranged or formed to adjoin the groove base surface (13) on the side facing away from the first groove side surface (11) and defines an inner diameter (17),
**characterized in**
- **that** the insert element (15, 15-1, 15-2) is formed from a metallic material with ferromagnetic properties,
- **that** the insert element (15-1) itself or a plurality of holding sections (24) projecting from the insert element (15-2) is or are each applied against the insert element holding section (16) with a radial force directed against the side facing away from the longitudinal axis (6),
- **that** the insert element (15-1) itself or at least those holding sections (24) projecting from the insert element (15-2) is or are heated by the energy generated by an electromagnetic field by means of an inducing device (18) to a temperature at least above the softening temperature of the plastic material of the plug connector body (4),
- **that** the plastic material is converted into a formable aggregate state at least in a direct contact region with the insert element (15-1) itself or at least in a direct contact region with the holding sections (24) projecting from the insert element (15-2), and
- **that** the insert element (15-1) itself penetrates into the formable plastic material in sections by means of the built-up radial force and is embedded in some sections, or that the holding sections (24) projecting from the insert element (15-2) penetrate into the formable plastic material in sections by means of the built-up radial force and are embedded in some section.

2. The method according to claim 1, **characterized in that** the inducing device (18) and the electromagnetic field generated by it are deactivated and thus the energy generation is ended, and after the temperature falls below the softening temperature, the plastic material previously in its formable aggregate state solidifies and the insert element (15-1) itself or at least those holding sections (24) projecting from the insert element (15-2) in the insert element holding section (16) is or are held in a positive locking manner by the plastic material.

3. The method according to claim 1 or 2, **characterized in that** the insert element holding section (16) is formed with a larger inner diameter (17) with respect to the inner diameter (14) of the groove base surface (13) and a stepped support surface (19) is formed between the insert element holding section (16) and the groove base surface (13).

4. The method according to one of the preceding claims, **characterized in that** the insert element holding section (16) is configured with a plurality of webs (20) arranged distributed over the circumference.

5. The method according to claim 4, **characterized in that** the webs (20) are arranged directly adjacent to each other and each have a parallel orientation with respect to the longitudinal axis (6).

6. The method according to claim 4 or 5, **characterized in that** the webs (20), as viewed in the direction of the longitudinal axis (6), are each formed with a cross section selected from the group of shapes of a circular section, a semicircular section, a trapezoid, a triangle.

7. The method according to one of the preceding claims, **characterized in that** the insert element (15-1) itself, as viewed in the direction of the longitudinal axis (6), is formed as a circular ring section being continuous almost over the circumference and having an interruption point (21).

8. The method according to claim 7, **characterized in that** two insert elements (15-1) are provided, which insert elements (15-1) are of the same design, and the two insert elements (15-1) are arranged directly adjacent to one another with a circumferentially offset arrangement with respect to the two interruption points (21).

9. The method according to claim 7 or 8, **characterized in that** the two interruption points (21) are arranged offset from one another by an angle with an angular value which originates from an angular value range the lower limit of which is 150°, in particular 170°, and the upper limit of which is 210°, in particular 190°.

10. The method according to one of the preceding claims, **characterized in that** the insert element (15-1) itself is formed in its undeformed initial position with an outer diameter (22) which is larger than the inner diameter (17) of the insert element holding section (16), or that at least the holding sections (24) projecting from the insert element (15-2) are formed in their undeformed initial position with an outer envelope which is larger than the inner diameter (17) of the insert element holding section (16).

11. The method according to one of the preceding claims, **characterized in that** the insert element (15-2) with the holding sections (24) projecting therefrom comprises a base body (23) formed continuously over the circumference in the form of a circular ring and the holding sections (24) are arranged projecting from the inner circumference of the base body (23) onto the side facing away from the longitudinal axis (6).

12. The method according to one of the preceding claims, **characterized in that** the sealing element (9) is inserted into the receiving groove (10) only after the stationary positioning of at least one of the insert elements (15-1) or after the stationary positioning of the insert element (15-2) with the holding sections (24) projecting therefrom and the formation of the receiving groove (10).

13. The method according to one of claims 1 to 11, **characterized in that** the sealing element (9) is inserted into the plug connector body (4) in the receiving groove (10) partially defined by the latter even before at least one of the insert elements (15-1) is inserted or before the insert element (15) is inserted with the holding sections (24) projecting therefrom, and only after the sealing element (9) has been arranged at least one of the insert elements (15- 1) or the insert element (15) with the holding sections (24) projecting therefrom is moved into the insert element holding section (16) and then the embedding in the formable plastic material is carried out in some sections.

14. A plug connector (1) for connecting lines for liquid and/or gaseous media to a second plug connector (2) to form a plug assembly (3), the first plug connector (1) comprising
- a plug connector body (4), which plug connector body (4) is tubular and made from a plastic material and defines a receiving space (5) with a longitudinal axis (6), and the longitudinal axis (6) extends between a first end region (7) and a second end region (8), wherein a first groove side surface (11) and at least a partial section of a groove base surface (13) of a receiving groove (10) are defined by the plug connector body (4)
- an insert element (15), which insert element (15) is inserted into the receiving space (5) to form the receiving groove (10), wherein a second groove side surface (12) is defined by the insert element (15) and the second groove side surface (12) is arranged closer to the first end region (7) than the first groove side surface (11) as viewed in the insertion direction,
- a sealing element (9), which sealing element (9) is configured annularly and is inserted into the receiving groove (10) defined by the plug connector body (4) and the insert element (15), and is held in position in the direction of the longitudinal axis (6), in particular produced using the method according to one of the preceding claims, wherein an insert element holding section (16) is provided in the plug connector body (4), which insert element holding section (16) is arranged or formed to adjoin the groove base surface (13) on the side facing away from the first groove side surface (11) and defines an inner diameter (17),
**characterized in**
- **that** the insert element (15) is formed from a metallic material with ferromagnetic properties,
- **that** the insert element (15) itself or at least those holding sections (24) projecting from the insert element (15) are embedded in the plastic material by means of an inducing device (18) and the energy generated by an electromagnetic field at least in some sections in a direct contact region with the insert element (15) itself or at least in some sections in a direct contact region with the holding sections (24) projecting from the insert element (15) and are held or held in a positive locking manner by the plastic material.

15. The plug connector (1) according to claim 14, **characterized in that** the insert element holding section (16) is formed with a larger inner diameter (17) with respect to the inner diameter of the groove base surface (13) and a stepped support surface (19) is formed between the insert element holding section (16) and the groove base surface (13).

16. The plug connector (1) according to claim 14 or 15, **characterized in that** the insert element holding section (16) is configured with a plurality of webs (20) arranged distributed over the circumference.

17. The plug connector (1) according to claim 16, **characterized in that** the webs (20) are arranged directly adjacent to each other, and each have a parallel orientation with respect to the longitudinal axis (6).

18. The plug connector (1) according to claim 16 or 17, **characterized in that** the webs (20), as viewed in the direction of the longitudinal axis (6), are each formed with a cross section selected from the group of shapes of a circular section, a semicircular section, a trapezoid and a triangle.

19. The plug connector (1) according to one of claims 14 to 18, **characterized in that** the insert element (15) itself is formed in its undeformed initial position with an outer diameter (22) which is larger than the inner diameter (17) of the insert element holding section (16), or that at least the holding sections (24) projecting from the insert element (15) are formed in their undeformed initial position with an outer envelope which is larger than the inner diameter (17) of the insert element holding section (16).

20. The plug connector (1) according to one of claims 14 to 19, **characterized in that** the insert element (15) with the holding sections (24) projecting therefrom comprises a base body (23) formed continuously over the circumference in the form of a circular ring and the holding sections (24) are arranged to project from the inner circumference of the base body (23) onto the side facing away from the longitudinal axis (6).

## Revendications

1. Procédé de formation d'un premier connecteur (1), ce premier connecteur (1) étant conçu pour la connexion de conduites pour des fluides liquides et/ou gazeux avec un deuxième connecteur (2) et étant prévu pour la formation d'un ensemble de connecteurs (3), dans lequel les étapes suivantes sont exécutées :
- mise à disposition d'un corps de connecteur (4) de forme tubulaire, qui est constitué d'une matière plastique et qui définit un espace de réception (5) avec un axe longitudinal (6), et l'axe longitudinal (6) s'étend entre une première zone d'extrémité (7) et une deuxième zone d'extrémité (8), une première surface latérale de rainure (11) et au moins une section partielle d'une surface de fond de rainure (13) d'une rainure de réception (10) avec un diamètre intérieur (14) étant définies par le corps de connecteur (4),
- mise à disposition d'un élément d'insertion (15, 15-1, 15-2), cet élément d'insertion (15, 15-1, 15-2) étant inséré dans l'espace de réception (5), vu dans une direction d'insertion, pour former la rainure de réception (10), une deuxième surface latérale de rainure (12) étant définie par l'élément d'insertion (15, 15-1, 15-2) et la deuxième surface latérale de rainure (12) étant disposée plus près de la première zone d'extrémité (7), vu dans la direction d'insertion, que la première surface latérale de rainure (11),
- mise à disposition d'un élément d'étanchéité (9), cet élément d'étanchéité (9) présentant une forme annulaire et étant inséré dans la rainure de réception (10) définie ou pouvant être définie par le corps de connecteur (4) et l'élément d'insertion (15, 15-1, 15-2) et étant maintenu positionné dans la direction de l'axe longitudinal (6)
dans lequel une section de maintien d'élément d'insertion (16) est prévue dans le corps de connecteur (4), cette section de maintien d'élément d'insertion (16) étant disposée ou formée dans le prolongement de la surface de fond de rainure (13) sur le côté opposé à la première surface latérale de rainure (11) et définissant un diamètre intérieur (17), **caractérisé en ce que**
- l'élément d'insertion (15, 15-1, 15-2) est constitué d'un matériau métallique ayant des propriétés ferromagnétiques,
- l'élément d'insertion (15-1) lui-même ou plusieurs sections de maintien (24) s'étendant à partir de l'élément d'insertion (15-2) sont respectivement appuyées, avec une force radiale dirigée vers le côté opposé à l'axe longitudinal (6), contre la section de maintien d'élément d'insertion (16),
- l'élément d'insertion (15-1) lui-même ou au moins les sections de maintien (24) s'étendant à partir de l'élément d'insertion (15-2) sont chauffées par l'énergie générée par un champ électromagnétique au moyen d'un dispositif d'induction (18) à une température au moins supérieure à la température de ramollissement du matériau plastique du corps de connecteur (4),
- la matière plastique est transformée en un agrégat déformable au moins dans une zone de contact direct avec l'élément d'insertion (15-1) lui-même ou au moins dans une zone de contact direct avec les sections de maintien (24) s'étendant à partir de l'élément d'insertion (15-2), et
- l'élément d'insertion (15-1) lui-même pénètre par sections dans le matériau plastique déformable et est intégré par endroits au moyen de la force radiale établie, ou les sections de maintien (24) s'étendant à partir de l'élément d'insertion (15-2) pénètrent à certains endroits dans le matériau plastique déformable et sont intégrées par endroits au moyen de la force radiale appliquée.

2. Procédé selon la revendication 1, **caractérisé en ce que** le dispositif d'induction (18) et le champ électromagnétique généré par celui-ci sont désactivés et ainsi la production d'énergie est arrêtée, et après le passage en dessous de la température de ramollissement, le matériau plastique qui se trouvait auparavant dans son état agrégat déformable se solidifie et l'élément d'insertion (15-1) lui-même ou au moins les sections de maintien (24) s'étendant à partir de l'élément d'insertion (15-2) sont maintenues par complémentarité de forme dans la section de maintien d'élément d'insertion (16) par le matériau plastique.

3. Procédé selon la revendication 1 ou 2, **caractérisé en ce que** la section de maintien d'élément d'insertion (16) est formée avec un diamètre intérieur (17) plus grand que le diamètre intérieur (14) de la surface de fond de rainure (13), et une surface d'appui étagée (19) est formée entre la section de maintien d'élément d'insertion (16) et la surface de fond de rainure (13).

4. Procédé selon l'une des revendications précédentes, **caractérisé en ce que** la section de maintien d'élément d'insertion (16) est formée avec une pluralité de nervures (20) réparties sur la circonférence.

5. Procédé selon la revendication 4, **caractérisé en ce que** les nervures (20) sont disposées de manière immédiatement adjacente entre elles et présentent chacune une orientation parallèle par rapport à l'axe longitudinal (6).

6. Procédé selon la revendication 4 ou 5, **caractérisé en ce que** les nervures (20), vues dans la direction de l'axe longitudinal (6), sont formées chacune avec une section transversale choisie dans le groupe de formes d'un segment de cercle, d'un segment de demi-cercle, d'un trapèze, d'un triangle.

7. Procédé selon l'une des revendications précédentes, **caractérisé en ce que** l'élément d'insertion (15-1) lui-même est formé, vu dans la direction de l'axe longitudinal (6), comme une section d'anneau circulaire presque continue sur la circonférence avec un point d'interruption (21).

8. Procédé selon la revendication 7, **caractérisé en ce que** deux éléments d'insertion (15-1) sont mis à disposition, ces éléments d'insertion (15-1) étant formés de manière identique entre eux et les deux éléments d'insertion (15-1) étant disposés de manière immédiatement adjacente entre eux avec une disposition décalée de manière circonférentielle entre eux par rapport aux deux points d'interruption (21).

9. Procédé selon la revendication 7 ou 8, **caractérisé en ce que** les deux points d'interruption (21) sont disposés de manière décalée entre eux d'un angle dont la valeur angulaire se trouve dans une plage de valeurs angulaires dont la limite inférieure est de 150°, plus particulièrement de 170°, et dont la limite supérieure est de 210°, plus particulièrement de 190°.

10. Procédé selon l'une des revendications précédentes, **caractérisé en ce que** l'élément d'insertion (15-1) lui-même est réalisé, dans sa position initiale non déformée, avec un diamètre extérieur (22) qui est plus grand que le diamètre intérieur (17) de la section de maintien d'élément d'insertion (16), ou **en ce qu'**au moins les sections de maintien (24) s'étendant à partir de l'élément d'insertion (15-2) sont réalisées, dans leur position initiale non déformée, avec une enveloppe extérieure qui est plus grande que le diamètre intérieur (17) de la section de maintien d'élément d'insertion (16).

11. Procédé selon l'une des revendications précédentes, **caractérisé en ce que** l'élément d'insertion (15-2) avec les sections de maintien (24) s'étendant à partir de celui-ci comprend un corps de base (23) formé de manière continue sur la circonférence sous forme d'anneau circulaire, et les sections de maintien (24) sont disposées en saillie à partir de la circonférence intérieure du corps de base (23) vers le côté opposé à l'axe longitudinal (6).

12. Procédé selon l'une des revendications précédentes, **caractérisé en ce que** l'élément d'étanchéité (9) n'est inséré dans la rainure de réception (10) qu'après le positionnement fixe d'au moins un des éléments d'insertion (15-1) ou après le positionnement fixe de l'élément d'insertion (15-2) avec les sections de maintien (24) s'étendant à partir de celui-ci et la formation de la rainure de réception (10).

13. Procédé selon l'une des revendications 1 à 11, **caractérisé en ce que** l'élément d'étanchéité (9) est inséré dans la rainure de réception (10) partiellement définie par le corps de connecteur (4) avant l'insertion d'au moins l'un des éléments d'insertion (15-1) ou avant l'insertion de l'élément d'insertion (15) avec les sections de maintien (24) s'étendant à partir de celui-ci dans le corps de connecteur (4) et ce n'est qu'après la disposition de l'élément d'étanchéité (9) qu'au moins l'un des éléments d'insertion (15-1) ou l'élément d'insertion (15) avec les sections de maintien (24) s'étendant à partir de celui-ci est introduit dans la section de maintien d'élément d'insertion (16), l'intégration par endroits dans le matériau plastique déformable étant ensuite effectuée.

14. Connecteur (1) pour la connexion de conduites pour des fluides liquides et/ou gazeux avec un deuxième connecteur (2) pour former un ensemble de connecteurs (3), le premier connecteur (1) comprenant :
- un corps de connecteur (4), ce corps de connecteur (4) présentant une forme tubulaire et étant constitué d'une matière plastique et définissant un espace de réception (5) avec un axe longitudinal (6), et l'axe longitudinal (6) s'étendant entre une première zone d'extrémité (7) et une deuxième zone d'extrémité (8), une première surface latérale de rainure (11) et au moins une section partielle d'une surface de fond de rainure (13) d'une rainure de réception (10) étant définies par le corps de connecteur (4),
- un élément d'insertion (15), cet élément d'insertion (15) étant inséré dans l'espace de réception (5) pour former la rainure de réception (10), une deuxième surface latérale de rainure (12) étant définie par l'élément d'insertion (15) et la deuxième surface latérale de rainure (12) étant disposée plus près de la première zone d'extrémité (7), vu dans la direction d'insertion, que la première surface latérale de rainure (11),
- un élément d'étanchéité (9), cet élément d'étanchéité (9) présentant une forme annulaire et étant inséré dans la rainure de réception (10) définie par le corps de connecteur (4) et l'élément d'insertion (15) et étant maintenu positionné dans la direction de l'axe longitudinal (6), plus particulièrement fabriqué à l'aide du procédé selon l'une des revendications précédentes,
- dans lequel une section de maintien d'élément d'insertion (16) est prévue dans le corps de connecteur (4), cette section de maintien d'élément d'insertion (16) étant disposée ou formée, dans le prolongement de la surface de fond de rainure (13), sur le côté opposé à la première surface latérale de rainure (11) et définissant un diamètre intérieur (17), **caractérisé en ce que**
- l'élément d'insertion (15) est constitué d'un matériau métallique ayant des propriétés ferromagnétiques,
- l'élément d'insertion (15) lui-même ou au moins les sections de maintien (24) s'étendant à partir de l'élément d'insertion (15) sont intégrées dans la matière plastique au moyen d'un dispositif d'induction (18) et de l'énergie générée par un champ électromagnétique, au moins par endroits, dans une zone de contact direct avec l'élément d'insertion (15) lui-même ou, au moins par endroits, dans une zone de contact direct avec les sections de maintien (24) s'étendant à partir de l'élément d'insertion (15) et maintenues, par complémentarité de forme, par la matière plastique.

15. Connecteur (1) selon la revendication 14, **caractérisé en ce que** la section de maintien d'élément d'insertion (16) est réalisée avec un diamètre intérieur (17) plus grand que le diamètre intérieur de la surface de fond de rainure (13), et une surface d'appui étagée (19) est formée entre la section de maintien d'élément d'insertion (16) et la surface de fond de rainure (13).

16. Connecteur (1) selon la revendication 14 ou 15, **caractérisé en ce que** la section de maintien d'élément d'insertion (16) est formée avec une pluralité de nervures (20) réparties sur la circonférence.

17. Connecteur (1) selon la revendication 16, **caractérisé en ce que** les nervures (20) sont disposées de manière immédiatement adjacente entre elles et présentent chacune une orientation parallèle à l'axe longitudinal (6).

18. Connecteur (1) selon la revendication 16 ou 17, **caractérisé en ce que** les nervures (20), vues dans la direction de l'axe longitudinal (6), sont formées chacune avec une section transversale choisie dans le groupe de formes suivant : un segment de cercle, un segment de demi-cercle, un trapèze, un triangle.

19. Connecteur (1) selon l'une des revendications 14 à 18, **caractérisé en ce que** l'élément d'insertion (15) lui-même est formé, dans sa position initiale non déformée, avec un diamètre extérieur (22) qui est plus grand que le diamètre intérieur (17) de la section de maintien d'élément d'insertion (16), ou **en ce qu'**au moins les sections de maintien (24) s'étendant à partir de l'élément d'insertion (15) sont réalisées, dans leur position initiale non déformée, avec une enveloppe extérieure qui est plus grande que le diamètre intérieur (17) de la section de maintien d'élément d'insertion (16).

20. Connecteur (1) selon l'une des revendications 14 à 19, **caractérisé en ce que** l'élément d'insertion (15) avec les sections de maintien (24) s'étendant à partir de celui-ci comprend un corps de base (23) réalisé de manière continue sur la circonférence sous la forme d'un anneau circulaire et les sections de maintien (24) sont disposées en saillie à partir de la circonférence intérieure du corps de base (23) vers le côté opposé à l'axe longitudinal (6).
